(19) Europäisches Patentamt
European Patent Office
Office européen des brevets

(11) **EP 3 495 836 B1**

(12) **EUROPÄISCHE PATENTSCHRIFT**

(45) Veröffentlichungstag und Bekanntmachung des Hinweises auf die Patenterteilung:
**24.08.2022  Patentblatt 2022/34**

(21) Anmeldenummer: **18206674.6**

(22) Anmeldetag: **16.11.2018**

(51) Internationale Patentklassifikation (IPC):
**G01S 5/02** (2010.01)    **G01S 13/93** (2020.01)

(52) Gemeinsame Patentklassifikation (CPC):
**G01S 5/0289; G01S 13/931;** G01S 2013/9316;
G01S 2013/9325; G01S 2013/9329

(54) **VERFAHREN ZUR DURCHFÜHRUNG VON ABSTANDSMESSUNGEN ZWISCHEN DEN FAHRZEUGEN EINER FAHRZEUGKOLONNE SOWIE FAHRZEUGMODUL ZUR VERWENDUNG BEI DEM VERFAHREN SOWIE FAHRZEUG**

METHOD FOR MEASURING THE DISTANCE BETWEEN VEHICLES IN A MOTORCADE AND A VEHICLE MODULE FOR USE IN THE METHOD, AND VEHICLE

PROCÉDÉ DE MISE EN OEUVRE DES MESURES DE DISTANCE ENTRE LES VÉHICULES D'UNE COLONNE DE VÉHICULE AINSI QUE MODULE DE VÉHICULE DESTINÉ À L'UTILISATION DANS LEDIT PROCÉDÉ ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2017  DE 102017222216**

(43) Veröffentlichungstag der Anmeldung:
**12.06.2019  Patentblatt 2019/24**

(73) Patentinhaber: **Volkswagen Aktiengesellschaft**
**38440 Wolfsburg (DE)**

(72) Erfinder: **El Assaad, Ahmad**
**38448 Wolfsburg (DE)**

(74) Vertreter: **2SPL Patentanwälte PartG mbB**
**Landaubogen 3**
**81373 München (DE)**

(56) Entgegenhaltungen:
**WO-A2-2007/133264    US-A1- 2017 289 864**

• Srujan ET AL: "Ultra-wide Band for Vehicle Platooning", Thesis, 1. August 2016 (2016-08-01), Seiten 1-86, XP055569401, Eindhoven University Gefunden im Internet:
URL:https://pure.tue.nl/ws/portalfiles/por tal/46945018/855414-1.pdf [gefunden am 2019-03-14]

**Beschreibung**

Verfahren zur Durchführung von Abstandsmessungen zwischen den Fahrzeugen einer Fahrzeugkolonne sowie Fahrzeugmodul zur Verwendung bei dem Verfahren sowie Fahrzeug.

Die Erfindung betrifft ein Verfahren zur Durchführung von Abstandsmessungen zwischen Fahrzeugen einer Fahrzeugkolonne. Der Vorschlag betrifft weiterhin eine ein Fahrzeugmodul zur Verwendung bei dem Verfahren, sowie ein Fahrzeug.

Für das Szenario von mit Funkkommunikationsmodulen ausgestatteten Fahrzeugen, die im öffentlichen Straßenverkehr direkt miteinander kommunizieren, sei es für ein kooperatives oder autonomes Fahren, oder auch für die Teilnahme am Mobilfunk und die Anbindung an das Internet oder die Versorgung mit anderen Datendiensten ist eine hohe Verlässlichkeit bei sicherheitskritischen Anwendungen unablässig oder für den Kunden sehr wichtig.

Immer mehr Logistikunternehmen sind auf der Suche nach technischen Lösungen zur Kraftstoffeinsparung und Erhöhung der Verkehrssicherheit für ihre Betriebslastwagen. Das Fahren von Lastwagen (auch Nutzfahrzeuge) in einem Platoon bietet die Möglichkeit auf eine Reduzierung des Kraftstoffverbrauchs durch die Verkleinerung der Abstände zwischen den Fahrzeugen, die gemeinsam in einem Platoon fahren. Es besteht ein direkter Zusammenhang zwischen dem Abstand zwischen den Platoon-Fahrzeugen und der Reduzierung des Kraftstoffverbrauchs und somit auch der Kosten.

Die Herausforderung liegt in der Minimierung des Abstandes zwischen den Fahrzeugen in einem Platoon. Dies verlangt eine Abstandsregelung mit einer genauen und zuverlässigen Referenz für die relative Abstandsmessung zwischen zwei hintereinanderfahrenden Fahrzeugen in einem Platoon. Der Gegenstand dieser Erfindungsmeldung ist die Nutzung von UWB Transceivern für die Beschaffung einer zuverlässigen und genauen Referenz für die Abstandsmessung zwischen zwei hintereinanderfahrenden Fahrzeugen in einem Platoon, um den Abstand zwischen diesen Fahrzeugen optimal zu minimieren.

Aktuell werden für die relative Abstandsmessung zwischen hintereinanderfahrenden Fahrzeugen verschiedene Technologien angewendet:

- RADAR
- LIDAR
- Stereo Kamera
- GNSS basierte Abstandsmessung

Dabei bedeuten Radar Radio Detection And Ranging, Lidar Light Detection And Ranging und GNSS Global Navigation Satellite System.

Die LIDAR und Stereo Kamera basierte relative Abstandsmessung sind wetterabhängig wie z.B. von Nebel oder Gewitter und benötigen für time of flight (TOF) Messung für kleine Distanzen (<1m) eine sehr hohe Auflösung, was die Kosten dieser Sensoren erhöht. Bei herkömmlichen RADAR-Systemen wird für die Distanzmessung bei sehr kleinen Abständen eine lange Totzeit benötigt. Diese begrenzt die Häufigkeit der Messungen, was für die Abstandsregelung bei sehr kurzen Abständen nachteilig ist. Hier muss schon sehr oft in kurzen Zeitabständen geregelt werden. Außerdem ist eine Interferenz durch andere RADAR Geräte anderer Fahrzeugen nicht ausgeschlossen. Zudem sind RADAR, LIDAR und Kamera basierte Abstandsmessungen mit relativ hohen Implementierungskosten verbunden. Die GNSS basierte Distanzmessung ist laut Stand der Technik der GNSS (GPS, Galileo, GLONASS, Beidou, etc..) basierten Positionierung stark von der Umgebung abhängig. Diese ist wegen Mehrwegeausbreitungen und non-line-of-sight (NLOS) Bedingungen stark fehleranfällig. Daher ist eine Abstandsregelung für das High-Density Platooning auf der Basis der GNSS basierten Positionierung nicht zuverlässig genug. Sie ist auch nicht genau genug, weil die Genauigkeit der Positionsbestimmung bei GNSS basierten Systemen sich auf 1 -3 m beläuft, wenn auch noch bestimmte Korrektursignale ausgewertet werden.

Ein Beispiel eines auf GPS Signalauswertung basierenden Positionsbestimmungssystem ist in US2004/0193372 A1 auch für den Anwendungsfall Platooning beschrieben. Dabei wird das GPS-System verbessert, indem es mit Bluetooth kombiniert wird. Über eine Bluetooth-Verbindung werden Lageinformationen ausgetauscht mit einem Fahrzeug des Platoons. Im Betrieb kommunizieren die Fahrzeuge Satelliten-Daten über die Bluetooth-Verbindungen. Dies ermöglicht es, die Bluetooth-Funkverbindungen zur Reduzierung der Anzahl der benötigten Satelliten für das GPS-System auszunutzen, ohne die Genauigkeit der Messungen zu verlieren. Auf die Möglichkeit der Verwendung von UWB-Kommunikation als Alternative zur Bluetooth-Kommunikation wird hingewiesen.

Ein weiteres Beispiel für ein solches System ist in US 2015/0269845 A1 beschrieben. Hier wird insbesondere auf die Notwendigkeit der hochgenauen Synchronisierung der Uhren bei den Fahrzeugen hingewiesen um über Laufzeitmessungen die genaue Position der Fahrzeuge zu messen. Als Lösung wird auf den Einsatz der hochgenauen Uhren bei den GNSS-Systemen hingewiesen.

Die Verwendung von UWB Transceivern für die Abstandsregelung bei dem Anwendungsfall des Platooning ist auch aus einer Masterarbeit der Technischen Universität Eindhoven bekannt. Diese Masterarbeit vom August 2016 stammt von A. Srujan und hat den Titel "Ultra-wide Band for Vehicle Platooning".

Aus der WO 2007 / 0 133 264 A2 ist es bekannt für die Erhöhung der Genauigkeit bei der Positionsbestimmung von Fahrzeugen eine Fahrzeug-zu-Fahrzeug-Kommunikation einzusetzen. Dabei findet eine Abstandsmessung mit dem Aussenden einer Wide Band Ranging Preamble am Anfang eines Zeitschlitzes statt, wobei den verschiedenen Fahrzeugen jeweils ein eigener Zeitschlitz zugeordnet wird.

Fahrzeugkommunikation ist aber auch im Bereich der Mobilfunknetze möglich. Bei dieser Technik muss allerdings die Basisstation die Nachrichten von Fahrzeug zu Fahrzeug vermitteln. Das ist der Bereich, wo die Kommunikation in der sogenannten "Infrastructure Domain" stattfindet. Für die kommende Mobilfunkgeneration wird auch die Fahrzeugdirektkommunikation ermöglicht. Bei LTE heißt diese Variante LTE-V, bei der 5G Initiative heißt diese Variante D2D.

Typische Kommunikations-Szenarien sind Sicherheitsszenarien, Verkehrseffizienzszenarien und Infotainment. Für den Bereich Sicherheit werden folgende Szenarien genannt: "Cooperative Forward Collision Warning", "Pre-Crash Sensing/Warning", "Hazardous Location Warning". In diesen Bereichen tauschen die Fahrzeuge untereinander Informationen wie Position, Richtung und Geschwindigkeit aus, auch Parameter wie Größe und Gewicht. Weitere Informationen die übertragen werden betreffen Absichtsinformationen, wie Fahrzeug beabsichtigt zu überholen, Fahrzeug biegt links/rechts ab, usw. die für das kooperative Fahren interessant sind. Dabei werden oft Sensordaten übermittelt. Falls eine Gefahrensituation vorliegt und der Fahrer nicht reagiert, könnte das Auto automatisch abbremsen, so dass ein Unfall verhindert wird oder zumindest die Folgen bei dem unvermeidlichen Unfall möglichst gering gehalten werden.

Im Bereich Verkehrseffizienz werden genannt: "Enhanced Route Guidance and Navigation", "Green-Light Optimal Speed Advisory", "V2V Merging Assistance" und das "Platooning". Mit Platooning ist das intelligente Kolonnenfahren als Anwendungsfall gemeint, welches auch unter dem Begriff "High Density Platooning" bekannt ist. Dabei werden die Abstände zwischen den Fahrzeugen der Kolonne z.B. LKWs der jeweiligen Verkehrssituation angepasst und geregelt. Ziel ist es den Abstand zwischen den Kolonnenfahrzeugen möglichst zu verringern um den Energieverbrauch zu senken. Dazu müssen ständig Nachrichten zwischen den Kolonnenfahrzeugen ausgetauscht werden.

Im Bereich Infotainment steht der Internet-Zugang im Vordergrund.

Derzeit sind folgende Mobilfunktechnologien für die Fahrzeugkommunikation anwendbar: 3GPP-basiertes UMTS, HSPA, LTE, und die kommenden 5G Standards. Für die Fahrzeugdirektkommunikation wird erwähnt LTE-V und 5G D2D.

Sobald Daten periodisch wiederkehrend übertragen werden müssen, ist es effizienter Übertragungsressourcen für die Übertragung dieser Daten zu reservieren und diese Übertragungsressourcen der Sendestation zuzuweisen. Diese Aufgabe übernimmt in den heutigen Mobilfunkstandards eine Verwaltungseinheit, die auch unter dem Begriff Scheduler bekannt ist. Diese Verwaltungseinheit ist heute typischerweise in der Mobilfunk-Basisstation angeordnet. Bei dem LTE Mobilkommunikationssystem wird die Basisstation kurz als eNodeB bezeichnet, entsprechend "Evolved Node Basis".

Insbesondere werden - im Mobilfunk - alle Aktivitäten der Nutzer innerhalb einer Zelle von der Basisstation orchestriert. Der Scheduler, es handelt sich in der Regel um eine Software-Komponente in der Basisstation, teilt jedem Teilnehmer mit, zu welchem Zeitpunkt und auf welchen Frequenzen des Übertragungsrahmens er bestimmte Daten senden darf. Seine Hauptaufgabe besteht also in der gerechten Zuordnung der Übertragungsressourcen zu den verschiedenen Teilnehmern. Dadurch werden Kollisionen vermieden, in beiden Übertragungsrichtungen von einem Teilnehmer (Uplink) und zu einem Teilnehmer (Downlink) der Datenverkehr geregelt und ein effizienter Zugriff für eine Vielzahl von Nutzern ermöglicht. Für die Fahrzeug-Direktkommunikation legt der Scheduler fest, welche Frequenzressource zu welchem Zeitpunkt für die Direktkommunikation verwendet werden darf.

Die Erfindung setzt sich zur Aufgabe die UWB-Abstandsmessungen für den Bereich "Platooning" weiter zu verbessern. Hier wird insbesondere der Fokus auf die Bedürfnisse des Individualverkehrs gesetzt. Es sind immer mehr Fahrzeuge auf den Straßen unterwegs und die Fahrzeuge werden kooperativ oder autonom gesteuert. Dafür ist es nötig immer mehr Daten zwischen Mobilfunknetz und den Fahrzeugen und auch zwischen den Fahrzeugen untereinander auszutauschen. Die Anzahl anderer Abstandsmessungen wird dadurch auch drastisch steigen. Störungen zwischen den Abstandsmessungen der verschiedenen Fahrzeuge untereinander sollten vermieden werden.

Diese Aufgabe wird durch ein Verfahren zur Durchführung von Abstandsmessungen zwischen den Fahrzeugen einer Fahrzeugkolonne gemäß Anspruch 1, ein Fahrzeug-Modul gemäß Anspruch 9 und ein Fahrzeug gemäß Anspruch 13 gelöst.

Die abhängigen Ansprüche beinhalten vorteilhafte Weiterbildungen und Verbesserungen der Erfindung entsprechend der nachfolgenden Beschreibung dieser Maßnahmen.

Bei dem erfindungsgemäßen Verfahren zur Durchführung von Abstandsmessungen zwischen den Fahrzeugen einer Fahrzeugkolonne, bei dem die Abstände zwischen den Fahrzeugen der Fahrzeugkolonne automatisch geregelt werden, wird zur Abstandsmessung eine Methode des UWB Ranging, entsprechend Ultra Wide Band Ranging, eingesetzt. Pro Einzelabstandsmessung wird eine Nachricht zu einem vorausfahrenden oder nachfolgenden Fahrzeug gesendet, welches nach Empfang dieser Nachricht eine sofortige Rückantwort zu dem ersten Fahrzeug zurücksendet. Das Verfahren zeichnet sich dadurch aus, dass eine Koordinierung der zeitlichen Abfolge der Einzelabstandsmessungen zwischen jeweils zwei Fahrzeugen der Fahrzeugkolonne erfolgt, derart, dass den Einzelabstandsmessungen jeweils eine geplante Zeit zugewiesen wird, wann sie ausgehend von einem Koordinierungsereignis stattfinden sollen, wobei das Koordinierungsereignis dem Aussenden einer Abstandsmessungs-Koordinierungsnachricht von einer Leitstelle oder einem Fahrzeug der Fahrzeugkolonne entspricht. Die Koordinierung erlaubt eine zuverlässige und genaue Referenz für die Abstandsregelung bei sehr kleinen Abständen zwischen den Fahrzeugen. Startzeitpunkte für die Einzelabstandsmessungen zwischen den Fahrzeugen der Fahrzeugkolonne werden erfindungsgemäß so koordiniert, dass die Einzelabstandsmessungen nacheinander durchgeführt werden, wobei die Einzelabstandsmessungen vom hinteren Ende der Fahrzeugkolonne beginnend nach vorne oder vom vorderen Ende der Fahrzeugkolonne beginnend nach hinten durchgeführt werden. Bei dieser Methode finden keine Einzelabstandsmessungen zeitlich parallel statt. Somit können sich diese Messungen nicht gegenseitig stören.

Vorzugsweise werden die Fahrzeuge der Fahrzeugkolonne mit Kommunikationsmitteln für die Fahrzeug-zu-Fahrzeug-Kommunikation, nachfolgend V2V-Kommunikation genannt, ausgestattet und die Abstandsmessungs-Koordinierungsnachricht wird über die Kommunikationsmittel für die V2V-Kommunikation an die weiteren Fahrzeuge der Fahrzeugkolonne ausgesendet. Bei der Aussendung über die Fahrzeug-Direktkommunikation werden Verzögerungen über zwischengeschaltete Stufen vermieden.

In diesem Zusammenhang ist es vorteilhaft, wenn die Koordinierung der Einzelabstandsmessungen von dem Führungsfahrzeug der Fahrzeugkolonne durchgeführt wird, in dem das Führungsfahrzeug die Abstandsmessungs-Koordinierungsnachricht an die weiteren Fahrzeuge der Fahrzeugkolonne sendet. Bei dem High-Density Platooning wird typischerweise das erste Fahrzeug der Kolonne die Aufgabe des Führungsfahrzeuges übernehmen. Es sendet dann auch die entsprechenden Befehle, wenn ein Bremsvorgang oder Beschleunigungsvorgang koordiniert eingeleitet werden soll.

Hier ist es von Vorteil, wenn die Abstandsmessungs-Koordinierungsnachricht an die weiteren Fahrzeuge der Fahrzeugkolonne per Broadcast oder Multicast gesendet wird. Dadurch werden durch Absendung einer einzigen Abstandsmessungs-Koordinierungsnachricht alle Fahrzeuge mit den nötigen Informationen versorgt.

Wird das LTE-V Mobilfunksystem für die Fahrzeug-Direktkommunikation eingesetzt, kann die Abstandsmessungs-Koordinierungsnachricht in vorteilhafter Weise, über den LTE Sidelink-Kanal SL-Broadcast Control Channel (SBCCH) an die weiteren Fahrzeuge der Fahrzeugkolonne gesendet werden. Alternativ könnte auch ein WLAN-P-Modul für die Fahrzeug-Direktkommunikation eingesetzt werden.

Zur Koordinierung der Abstandsmessungen in einer einzigen Abstandsmessungs-Koordinierungsnachricht ist es vorteilhaft die geplanten Startzeitpunkte für die Einzelabstandsmessungen zwischen den Fahrzeugen der Fahrzeugkolonne in die Nachricht einzutragen.

Zusätzlich kann in vorteilhafter Weise, in der Abstandsmessungs-Koordinierungsnachricht eine Referenzzeit zur Synchronisierung der Uhren in den einzelnen Fahrzeugen der Fahrzeugkolonne eingetragen werden. Die Synchronisierung der Uhren kann dadurch immer aktuell durchgeführt werden, bevor die Abstandsmessungen in dem nächsten Zyklus beginnen. Dies ist zumindest dann von Vorteil, wenn die Abstandsmessungen direkt im Anschluss von dem Aussenden der Abstandsmessungs-Koordinierungsnachricht beginnen.

Für die praktische Implementierung ist es von Vorteil, wenn zur Abstandsmessung die Methode des UWB Ranging in der Art Single-Sided Two-Way Ranging SS-TWR oder Double-Sided Two-Way Ranging DS-TWR durchgeführt wird.

Für ein Fahrzeugmodul zur Verwendung bei dem Verfahren zur Durchführung von Abstandsmessungen zwischen den Fahrzeugen einer Fahrzeugkolonne, bei dem die Abstände zwischen den Fahrzeugen der Fahrzeugkolonne automatisch geregelt werden, wobei zur Abstandsmessung eine Methode des UWB Ranging, entsprechend Ultra Wide Band Ranging, eingesetzt wird, ist es vorteilhaft, wenn das Fahrzeugmodul ein Fahrzeug-Direktkommunikationsmodul für die Absendung und den Empfang von Nachrichten aufweist, wobei das Fahrzeug-Direktkommunikationsmodul ausgelegt ist, pro Einzelabstandsmessung eine Nachricht zu einem vorausfahrenden oder nachfolgenden Fahrzeug zu senden, welches nach Empfang dieser Nachricht eine sofortige Rückantwort zu dem ersten Fahrzeug zurücksendet, und ein Abstandsregelmodul. Das Abstandsregelmodul und das Fahrzeug-Direktkommunikationsmodul werden dabei so ausgelegt, dass über das Fahrzeug-Direktkommunikationsmodul eine Abstandsmessungs-Koordinierungsnachricht an die weiteren Fahrzeuge der Fahrzeugkolonne gesendet werden kann. Das Abstandsregelmodul ist dabei ausgelegt, eine Koordinierung der zeitlichen Abfolge der Einzelabstandsmessungen zwischen jeweils zwei Fahrzeugen der Fahrzeugkolonne vorzunehmen, derart, dass das Abstandsregelmodul den Einzelabstandsmessungen jeweils eine geplante Zeit zuweist, wann sie ausgehend von einem Koordinierungsereignis stattfinden sollen, wobei das Koordinierungsereignis dem Aussenden einer Abstandsmessungs-Koordinierungsnachricht entspricht. Dazu ist das Abstandsregelmodul ausgelegt, Startzeitpunkte für die Einzelabstandsmessungen so zu koordinieren, dass die Einzelabstandsmessungen nacheinander durchgeführt werden, wobei die Einzelabstandsmessungen vom hinteren Ende der Fahrzeugkolonne beginnend nach vorne oder vom vorderen Ende der Fahrzeugkolonne beginnend nach hinten durchgeführt werden, wobei die Startzeitpunkte in der Abstandsmessungs-Koordinierungsnachricht zu den Fahrzeugen der Fahrzeugkolonne übertragen werden. Für die entsprechenden Maßnahmen für das Fahrzeugmodul gelten die entsprechenden Vorteile, wie zuvor im Zusammenhang mit den entsprechenden Maßnahmen des erfindungsgemäßen Verfahrens erläutert. Erfindungsgemäß handelt es sich bei dem Fahrzeug-Direktkommunikationsmodul um ein Mobilfunk-Kommunikationsmodul, das für die Fahrzeug-Direktkommunikation ausgelegt ist, z.B. in der Form von LTE-V.

Für die Synchronisierung der Uhren der Fahrzeuge der Fahrzeugkolonne ist es vorteilhaft, wenn das Fahrzeug-Direktkommunikationsmodul so ausgelegt ist, dass es die aktuelle Uhrzeit der Uhr eines GNSS-Moduls des Fahrzeugmoduls entsprechend Global Navigation Satellite System in die Abstandsmessungs-Koordinierungsnachricht als Referenzzeit einträgt.

Der Vorschlag betrifft ebenfalls ein Fahrzeug, in dem ein erfindungsgemäßes Fahrzeugmodul verbaut ist.

Ein Ausführungsbeispiel der Erfindung ist in den Zeichnungen dargestellt und wird nachfolgend anhand der Figuren näher erläutert.

Es zeigen:

Fig. 1    das Prinzip der Fahrzeugkommunikation über Mobilfunk;

Fig. 2    den prinzipiellen Ablauf der UWB-Abstandsmessung zwischen den Fahrzeugen des Platoons;

Fig. 3    ein Blockdiagramm für die Fahrzeugelektronik eines Kraftfahrzeuges;

Fig. 4    das Nachrichtenformat für die Einrichtung der Abstandsmessung bei den einzelnen Platoon-Teilnehmern seitens einer Verwaltungseinheit für das Platoon; und

Fig. 5    den zeitlichen Ablauf der UWB-Abstandsmessung zwischen den Fahrzeugen des Platoons.

Die vorliegende Beschreibung veranschaulicht die Prinzipien der erfindungsgemäßen

Offenbarung.

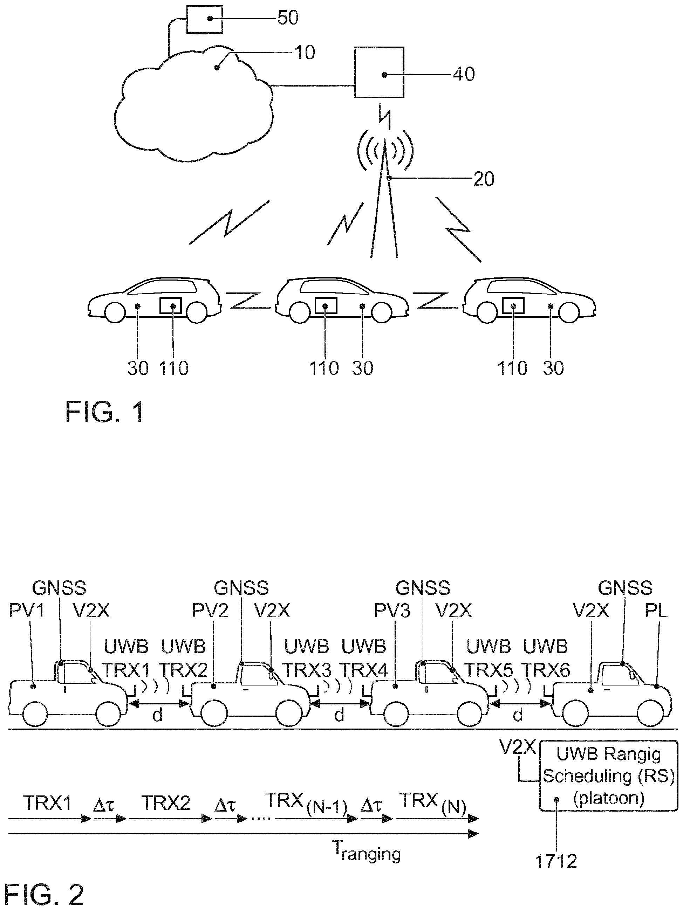

Fig. 1 zeigt das Prinzip der Fahrzeugkommunikation mittels Mobilfunk. Die Fahrzeuge sind mit Bezugszahl 30 versehen.

Der Begriff Fahrzeug versteht sich als Sammelbegriff sei es für Kraftfahrzeuge mit Brennkraftmaschine oder Elektromotor, sei es für Fahrräder mit und ohne Elektromotor oder andere mit Muskelkraft betriebene Fahrzeuge, sei es für Fahrzeuge mit einem, zwei, vier oder mehr Rädern. Sei es für Motorräder, Personenkraftwagen, Lastkraftwagen, Busse, Landwirtschaftsfahrzeuge oder Baumaschinen. Die Aufzählung ist nicht abschließend und umfasst auch weitere Fahrzeugkategorien.

Die Fahrzeuge in Fig. 1 sind jeweils mit einer sogenannten On-Board Unit 110 ausgestattet, die als Sende- und Empfangseinheit für die Kommunikation in einem Mobilfunknetz dient. Diese On-Board Unit 110 ist Teil einer Mobilfunknetz-Teilnehmerstation 30 im Sinne der Offenbarung der Erfindung. Im dargestellten Fall handelt es sich bei den Mobilfunknetz-Teilnehmerstationen um Personenkraftwagen. Alle Nachrichten von den Fahrzeugen (Uplink) und zu den Fahrzeugen (Downlink) werden entweder über eine Basisstation 20 geleitet, die eine Mobilfunkzelle bedient oder im Fall von Fahrzeugdirektkommunikation (Sidelink) unmittelbar zwischen den Fahrzeugen ausgetauscht. Befinden sich die Fahrzeuge innerhalb dieser Mobilfunkzelle, sind sie bei der Basisstation 20 angemeldet bzw. eingebucht. Verlassen sie die Mobilfunkzelle, werden sie an die benachbarte Zelle übergeben (Handover) und dementsprechend an der Basisstation 20 abgemeldet bzw. ausgebucht. Die Basisstation 20 stellt auch einen Zugang zum Internet zur Verfügung, so dass die Fahrzeuge 30 bzw. alle anderen Mobilfunk-Teilnehmer in der Mobilfunkzelle mit Internetdaten versorgt sind. Dazu steht die Basisstation 20 über die sogenannte S1-Schnittstelle mit dem EPC 40 (Evolved Packet Core) in Verbindung. Über das Internet 10 oder ein anderes Weitverkehrsnetz WAN erreichbar ist noch ein Zentralrechner 50 einer Verkehrsleitzentrale vorhanden, der den Verkehrsfluss auf den Straßen steuern/überwachen kann.

Derartige Mobilfunk-Technologien sind standardisiert und es wird diesbezüglich auf die entsprechenden Spezifikationen von Mobilfunkstandards hingewiesen. Als ein modernes Beispiel eines Mobilfunkstandards wird auf die 3GPP Initiative und den LTE-Standard (Long Term Evolution) Bezug genommen. Viele der zugehörigen ETSI Spezifikationen liegen z.Z. in der Version 13 vor. Als Beispiel wird genannt: ETSI TS 136 213 V13.0.0 (2016-05); Evolved Universal Terrestrial Radio Access (E-UTRA); Physical layer procedures (3GPP TS 36.213 version 13.0.0 Release 13).

LTE steht vor allem für hohe Übertragungsraten und kurze Reaktionszeiten. Die Steigerung der Übertragungsrate wird bei LTE durch bessere Modulationsverfahren, flexiblere Frequenznutzung und größere Kanalbandbreiten erreicht. Zur Zeit werden bei LTE laut Spezifikation pro 20-MHz-Band rechnerisch und abzüglich des Overheads eine Übertragungsrate von über 300 MBit/s im Downlink und 75 MBit/s im Uplink erreicht.

Die Übertragungsgeschwindigkeit von LTE ist im Wesentlichen vom Frequenzbereich, der Kanalbreite, dem Abstand zur Basisstation 20 und der Teilnehmeranzahl innerhalb der Mobilfunkzelle abhängig. Je mehr Nutzer die Bandbreite gleichzeitig nutzen, desto geringer fällt die Übertragungsrate pro Teilnehmer aus.

Für den Downlink wird die OFDMA-Technik (Orthogonal Frequency Division Multiple Access) verwendet. Dort wird die bekannte Vielträgerübertragungstechnik OFDM (Orthogonal Frequency Division Multiplexing) verwendet, bei der Datensymbole auf die einzelnen Träger mittels QPSK (Quadrature Phase-Shift Keying) oder QAM (Quadrature Amplitude Modulation) moduliert werden. Bei OFDMA wird das zur Verfügung stehende Frequenzband in viele schmale Bänder (Kanäle) aufgeteilt. Die Bandbreite wird flexibel genutzt, um das Äußerste an Übertragungsleistung aus den Frequenzen herauszuholen.

Spezielle Algorithmen wählen die geeigneten Kanäle aus und berücksichtigen dabei die Einflüsse aus der Umgebung. Dabei werden vorzugsweise nur die Träger zur Übertragung genutzt, die für den Nutzer an seinem jeweiligen Ort am günstigsten sind.

Für den Uplink wird die SC-FDMA Technik verwendet (Single Carrier Frequency Division Multiple Access). Das ist ein Einträgerzugriffsverfahren was ansonsten OFDMA sehr ähnlich ist. SC-FDMA weist geringere Leistungsschwankungen auf und macht einfachere Leistungsverstärker möglich. Das schont vor allem den Akku mobiler Geräte.

Für die Sidelink-Kommunikation werden ebenfalls Ressourcen der Uplink-Kommunikation benutzt.

Mit Hilfe der Fahrzeug-zu-Fahrzeug-Kommunikation, die über Sidelink Kommunikation stattfindet, können neue fahrzeugrelevante Anwendungen realisiert werden. Als Beispiel wird das eingangs beschriebene "Platooning" genannt. Dabei werden mehrere oder sogar viele Fahrzeuge mit Hilfe eines technischen Steuerungssystems koordiniert gesteuert, so dass sie in sehr geringem Abstand hintereinander fahren können, ohne dass die Verkehrssicherheit beeinträchtigt wird. Dies führt, insbesondere bei Lastkraftwagen zu einer beträchtlichen Verringerung des Kraftstoffverbrauchs und zu einer beträchtlichen Verringerung von Treibhausgasen. Diese Anwendung ist aber besonders sicherheitskritisch. Es muss jederzeit gewährleistet sein, dass die Fahrzeuge der Kolonne anhalten können. Der Bremsvorgang wird koordiniert, damit alle Fahrzeuge gleichzeitig bremsen um Probleme mit einem Verrutschen der Ladung bis hin zu Kollisionen zu vermeiden. Dafür wird die Fahrzeug-zu-Fahrzeug Kommunikation eingesetzt. Hier kommt es in besonderer Weise auch auf die Genauigkeit der Abstandsmessung an. Fahrzeug-zu-Fahrzeug-Kommunikation könnte alternativ auch über eine andere Funktechnik realisiert werden, z.B. über WLAN P.

Gemäß der Erfindung wird die neuere Abstandsmessung mit UWB Transceivern (TRX) eingesetzt. Allein der Einsatz der UWB Abstandsmessung ist schon vorteilhaft, was die Störanfälligkeit anbelangt. Die UWB-Signale sind sehr breitbandig und werden mit geringer spektraler Leistung, d.h. mit einer geringen Peak-to-Average Power Ratio PAPR abgestrahlt. Sie stören deshalb kaum die andere schmalbandigere Fahrzeug-zu-Fahrzeug-Kommunikation.

Eine Besonderheit bei der Erfindung besteht darin, dass die verschiedenen Abstandsmessungen zwischen den Platoon-Teilnehmern durch das Platoon-Führungsfahrzeug, häufig auch als Platoon Leader bezeichnet, zeitlich geplant wird, um Interferenzen zwischen den UWB-Transceivern zu vermeiden. Das Platoon-Führungsfahrzeug ist in der Regel das erste Fahrzeug, der Kolonne, hinter dem also die anderen Kolonnenfahrzeuge mit geringem Abstand hinterher fahren.

Wie die zeitliche Planung stattfindet und wie die einzelnen Abstandsmessungen durchgeführt werden, wird im Folgenden genau erläutert.

In Fig. 2 ist eine Fahrzeugkolonne mit vier Fahrzeugen dargestellt. Es handelt sich um Nutzfahrzeuge. Typischerweise sind es Lkws mit entsprechender Länge, die sich zu einem Verband zusammenschließen, um eine Wegstrecke gemeinsam zurückzulegen um Energie zu sparen und die Umwelt zu schonen. Das Platoon-Führungsfahrzeug ist mit PL, entsprechend "Platoon Leader" bezeichnet. Die nachfolgenden Kolonnenfahrzeuge sind mit PV3 bis PV1 bezeichnet. Mit der Bezeichnung GNSS soll verdeutlicht werden, dass die Fahrzeuge mit Satellitennavigation ausgerüstet sind. Mit der Bezeichnung V2X wird angedeutet, dass die Fahrzeuge mit On-Board-Kommunikationsmitteln für die Fahrzeugdirektkommunikation ausgerüstet sind. Weiterhin ist dargestellt, dass die Fahrzeuge ebenfalls mit UWB Transceivern ausgestattet sind. Dabei sind die Fahrzeuge jeweils mit 2 UWB Transceivern bestückt, einmal an der Front des Fahrzeuges und einmal an dem Heck des Fahrzeuges. Die Fahrzeuge werden auch mit einer Platoon-Koordinierungseinheit 1712 ausgerüstet. Diese Funktion wird aber nur bei dem Platoon-Führungsfahrzeug PL aktiviert.

Die Abstandsmessung zwischen zwei Kolonnenfahrzeugen funktioniert so, dass ein Fahrzeug ein UWB-Signal mit kurzer Dauer zum vorausfahrenden Fahrzeug aussendet. In die zu übertragende Nachricht wird ein Zeitstempel eingetragen, der den Sendezeitpunkt nach der in dem die Nachricht sendenden Fahrzeug laufenden Uhr angibt. Das vorausfahrende Fahrzeug empfängt die UWB-Nachricht und sendet gleich eine Bestätigungsnachricht zurück, wobei sie ihrerseits ihren Zeitstempel für die Aussendung der Bestätigungsnachricht in die Bestätigungsnachricht einträgt. Es wird also so vorgegangen wie bei der "Round Trip Time-Messung" in Kommunikationsnetzwerken. Das erste Fahrzeug empfängt die Bestätigungsnachricht und wertet sie aus. Die Laufzeit der UWB-Signale über die Luftschnittstelle kann mit den Zeitstempeln beider Nachrichten berechnet werden. Daraus ergibt sich dann auch der Abstand zwischen beiden Fahrzeugen über die bekannte Formel $S = c * t_{prop}$, mit c gleich der Lichtgeschwindigkeit in Luft und $t_{prop}$ gleich der gemessenen Laufzeit. Voraussetzung für dieses Messverfahren ist, dass die Uhren in den beteiligten Fahrzeugen hochgenau synchronisiert sind.

Weitere Details zu diesem Abstandsmessverfahren sind aus der eingangs erwähnten Masterarbeit von A. Srujan bekannt. Dort wird das sogenannte Double-sided Two-way ranging Verfahren DS-TWR empfohlen, weil es hinsichtlich der Genauigkeit Vorteile hat. Dabei wird die Abstandsmessung zweimal hintereinander durchgeführt. Bei der zweiten Messung sendet das vorausfahrende Fahrzeug das UWB-Signal aus und das erste Fahrzeug antwortet hierauf. Für weitere Einzelheiten zu diesem Abstandsmessverfahren wird auch in Bezug auf die ausführliche Offenbarung ausdrücklich auf die Masterarbeit Bezug genommen.

Die zeitliche Synchronisation für die zeitliche Planung der Distanzmessungen zwischen den Fahrzeugen der Kolonne erfolgt über die hochgenaue GNSS Zeitreferenz. Diese Zeitreferenz ist ca. 1μs genau, was für die zeitliche Planung der Sendezeitpunkte für die verschiedenen Distanzmessungen in der Kolonne ausreichend ist. Jede Distanzmessung wird innerhalb einer Messdauer TRX1 bis TRXN durchgeführt, die klein genug ist, z.B. 1 ms. Bei einer Geschwindigkeit von 100 km/h bewegt sich das Fahrzeug in der Zeit von 1 ms nur 28 cm weit. Deswegen kann die Abstandsregelung noch sehr fein und hochgenau stattfinden, wenn die Messung nur eine Millisekunde dauert. Der Parameter $\Delta\tau$ bezeichnet den zeitlichen Abstand zwischen zwei Messungen und beläuft sich auf etwa 1 μs. Genauer lassen sich die Messungen nicht koordinieren, weil die Uhren nur auf 1 μs genau synchronisiert sind. Es muss aber sowieso die Kohärenzzeit im Übertragungskanal für die UWB-Abstandsmessungen abgewartet werden, damit es nicht zu Interferenz kommen kann. Diese liegt aber im Nano-Sekunden-Bereich. Die Gesamtdauer aller Abstandsmessungen im Platoon "$T_{ranging}$" beträgt dann bei 4 Fahrzeugen in der Kolonne:

$$T_{ranging} = 3*1 \text{ ms} + 3*0.001 \text{ μs} = 3.003 \text{ ms}.$$

Damit wird die Vermeidung von gegenseitigen Interferenzen zwischen den UWB Transceivern sichergestellt.

Die Genauigkeit der Abstandsmessung bei solchen UWB Abstandsmesssystemen liegt bei 10 cm in Sichtlinienverhältnissen LOS (Line of Sight Conditions). Das gilt auch wenn die UWB Transceiver sehr nah beieinander positioniert sind (≤1m Abstand). Wie in Fig. 2 gezeigt, sind die UWB Antennen jeweils an Front und Heck des Fahrzeuges montiert. Wenn der Abstand d der Fahrzeuge auf 1 m und weniger geregelt wird, kommen sie sehr nah zusammen. Wegen der hohen Genauigkeit der UWB Abstandsmessung ist somit eine ausreichend genaue Abstandsregelung für den Einsatz im Platoon sichergestellt.

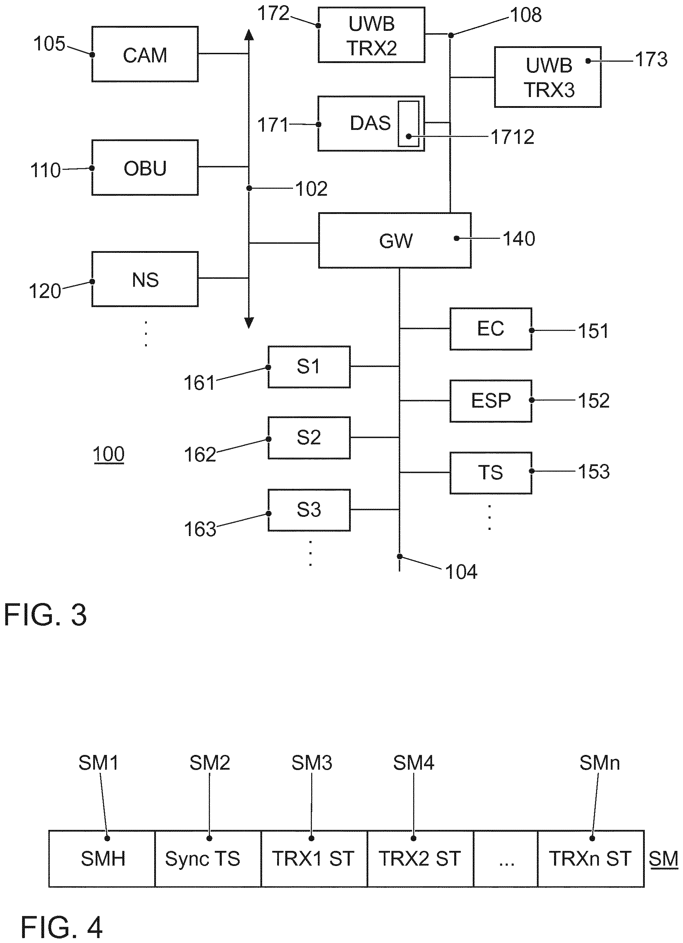

Fig. 3 zeigt den typischen Aufbau einer Kfz-Elektronik 100 eines modernen Kraftfahrzeuges 30. Mit der Bezugszahl 151 ist ein Motorsteuergerät bezeichnet. Die Bezugszahl 152 entspricht einem ESP-Steuergerät und die Bezugszahl 153 bezeichnet ein Getriebesteuergerät. Weitere Steuergeräte wie Airbag-Steuergerät, usw. können im Kraftfahrzeug vorhanden sein. Die Vernetzung solcher Steuergeräte geschieht typischerweise mit dem CAN-Bussystem (Controller Area Network) 104 welches als ISO Norm standardisiert ist, ISO 11898. Da verschiedene Sensoren im Kraftfahrzeug installiert werden und diese nicht mehr nur an einzelne Steuergeräte angeschlossen werden, werden solche Sensordaten ebenfalls über das Bussystem 104 zu den einzelnen Steuergeräten übertragen. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren usw. Die verschiedenen Sensoren mit dem das Fahrzeug ausgestattet ist, sind in der Fig. 3 mit der Bezugszahl 161, 162, 163 bezeichnet.

Das moderne Kraftfahrzeug kann aber noch weitere Komponenten aufweisen wie Videokameras, z.B. als Rückfahrkamera oder als Fahrerüberwachungskamera oder auch als Frontkamera um das Verkehrsgeschehen zu beobachten.

Seit einigen Jahren werden Fahrerassistenzsysteme angeboten, welche mit Radar-, Lidar- oder Videosensorik die Fahrumgebung erfassen, sich durch Interpretation dieser Sensordaten eine interne Repräsentation der Fahrsituation bilden und aufbauend auf diesem Wissen zunehmend anspruchsvolle Funktionen durch Information und Warnung des Fahrers bis hin zu gezielten Eingriffen in die Fahrzeugführung ausführen. So kann beispielsweise die Längsführung auf gut strukturierten Straßen, wie Autobahnen, durch ein mit Lidarsensorik und/oder Radarsensorik ausgestattetes ACC System (Adaptive Cruise Control) zu einem hohen Zeitanteil automatisch ausgeführt werden. In der Fig. 3 ist als Beispiel ein Fahrerassistenzsystem mit dem Bezugszeichen 171 versehen. Für den hier betrachteten Fall der Realisierung einer Abstandsregelung für das High Density Platooning ist ein UWB-Abstandsmesssystem in dem Kraftfahrzeug installiert. Dafür sind pro Fahrzeug zwei UWB Transceiver 172, 173 installiert. Die Einheit 1712, die die Abstandsregelung koordiniert, ist bei diesem Ausführungsbeispiel in dem Steuergerät des Fahrerassistenzsystems 171 vorgesehen. Alternativ könnte sie in einem separaten Steuergerät, oder einem anderen Steuergerät implementiert werden. Die Komponenten 171, 172 und 173 sind über ein weiteres Bussystem 108 vernetzt. Zu diesem Zweck kann ebenfalls das CAN-Bussystem eingesetzt werden.

Im Kraftfahrzeug befinden sich dann auch noch weitere elektronische Vorrichtungen. Diese sind mehr im Bereich der Fahrgastzelle angeordnet und werden oft auch von dem Fahrer bedient. Beispiele sind eine Benutzerschnittstellenvorrichtung (nicht dargestellt) mit dem der Fahrer Fahrmodi anwählen kann, aber auch klassische Komponenten bedienen kann. Darunter fallen Gangwahl sowie auch Blinker-Steuerung, Scheibenwischersteuerung, Lichtsteuerung, usw.

Davon unterschieden wird oft ein Navigationssystem 120, welches ebenfalls im Bereich des Cockpits verbaut wird. Die Route, welche auf einer Karte angezeigt wird, kann auf einem Display im Cockpit dargestellt werden. Die Bezugszahl 110 bezeichnet noch eine On-Board Unit. Diese On-Bord Unit 110 entspricht einem Kommunikationsmodul über das das Fahrzeug mobile Daten empfangen und senden kann. Wie beschrieben kann es sich hier um ein Mobilfunk-Kommunikationsmodul, z. B. nach dem LTE und LTE-V-Standard handeln oder um ein WLAN-P-Modul.

Die Geräte des Fahrgastraumes sind ebenfalls untereinander vernetzt über ein Bussystem, das mit der Bezugszahl 102 bezeichnet wird. Es kann sich z. B. um das Highspeed CAN-Bussystem nach ISO 11898-2 Standard handeln, hier allerdings in der Variante für Datenübertragung mit höherer Datenrate zwischen Infotainment-Geräten. Alternativ wird auch Ethernet für die Vernetzung von Komponenten im Fahrzeug eingesetzt. Zu dem Zweck, das fahrzeugrelevante Sensordaten über das Kommunikationsmodul 110 zu einem anderen Fahrzeug oder zu einem anderen Zentralrechner übertragen werden sollen, ist das Gateway 140 vorgesehen. Dieses ist mit allen drei verschiedenen Bussystemen 102, 104 und 108 verbunden. Das Gateway 140 ist dazu ausgelegt die Daten, die es über den CAN-Bus 104 empfängt, so umzusetzen, dass sie in das Übertragungsformat des Highspeed-CAN-Busses 102 umgesetzt werden, so dass sie in den dort spezifizierten Paketen verteilt werden können. Für die Weiterleitung dieser Daten nach extern, ist das Kommunikationsmodul 110 mit dazu ausgerüstet, diese Datenpakete zu empfangen und wiederum in das Übertragungsformat des entsprechend eingesetzten Kommunikationsstandards umzusetzen. In einer anderen Ausführungsvariante kann das Platoon-Koordinierungsmodul 1712 in der On-Board Unit 110 integriert sein. Dann müssen die von und zu den UWB Transceivern 172 und 173 über das Gateway 140 geleitet werden.

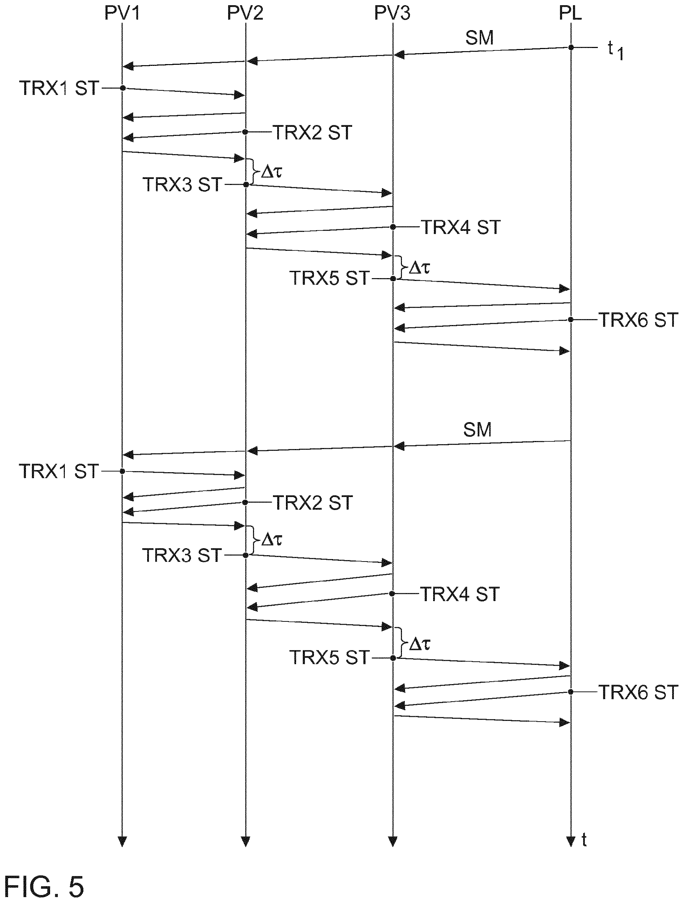

Fig. 5 zeigt noch den Ablauf der Kommunikation für den Anwendungsfall des schon erwähnten "Platoonings". Typischerweise werden Platoons mit bis zu 10 Fahrzeugen gebildet. Bei längeren Platoons gäbe es für den übrigen Verkehr Probleme, außerdem wäre der Aufwand für die Koordinierung der Fahrzeuge größer.

Das Platoon-Führungsfahrzeug PL kommuniziert mit den anderen Platoon-Fahrzeugen PV1 bis PV3 über die LTE-V Fahrzeug-zu-Fahrzeug-Kommunikation, wofür die Fahrzeuge ja mit der On-Board-Kommunikationseinheit 110 ausgestattet sind. Die Fahrzeuge melden sich jeweils bei dem Platoon-Führungsfahrzeug PL an, wenn sie dem Platoon beitreten möchten. Im Folgenden wird davon ausgegangen, dass sich die Fahrzeuge PV1 bis PV3 bei dem Platoon-Führungsfahrzeug PL angemeldet haben.

Für die Koordinierung der Abstandsmessungen findet jetzt folgender Vorgang statt. Zum Zeitpunkt $t_1$ sendet das Platoon-Führungsfahrzeug PL eine Abstandsmessungs-Koordinierungsnachricht SM an die Fahrzeuge des Platoons. Diese Nachricht hat das in Fig. 4 gezeigte Format. Im Feld SM1 steht der Kopfteil SMH der Koordinierungsnachricht. Anhand dieses Kopfteils erkennen die Teilnehmer um welchen Nachrichtentyp es sich handelt. Im Feld SM2 steht ein Zeitstempel Sync TS. Dieser Zeitstempel dient zur Synchronisierung der Uhren bei den einzelnen Teilnehmern. Das Platoon-Führungsfahrzeug PL liefert also den aktuellen Stand seiner Uhr in dieser Nachricht mit. Danach folgen in den Feldern SM3 bis SMn die Zeitangaben TRX1 ST bis TRXn ST, wann die einzelnen UWB Transceiver 172, 173 bei den Platoon-Fahrzeugen die Abstandsmessung durchführen sollen. Mit dieser Abstandsmessungs-Koordinierungsnachricht SM findet also das "Scheduling" der Abstandsmessungen im Platoon statt. Wie in dem Beispiel von Fig. 2 gezeigt, wird die erste Abstandsmessung TRX1 für das letzte Fahrzeug PV1 im Platoon geplant. Die letzte Abstandmessung wird für TRX6 zwischen dem Platoon-Führungsfahrzeug und dem folgenden Fahrzeug PV3 geplant. Die Planung erfolgt so, dass alle Messungen zu anderen Zeitpunkten stattfinden, so dass keine Messungen zeitlich parallel ablaufen. Dadurch werden Störungen von UWB-Abstandsmessungen untereinander von vornherein vermieden. Die Abstandsmessungs-Koordinierungsnachricht SM wird per Broadcast über den Sidelink-Kanal SL Broadcast Control Channel (SBCCH) ausgesendet. Alternativ kann sie per WLAN p oder über die normale Mobilkommunikation mit Uplink und Downlink Übertragungsrichtung zu den Platoon-Fahrzeugen übertragen werden. Alle Platoon-Fahrzeuge werten diese Nachricht aus und konfigurieren sich entsprechend der für sie vorgegebenen Zeiten.

Zum Zeitpunkt TRX1 ST startet die erste Messung. Der Transceiver TRX1 des Fahrzeuges PV1 fügt in die UWB-Abstandsmessnachricht den Zeitstempel für den Sendezeitpunkt ein. Das Fahrzeug PV2 empfängt diese Nachricht und sendet unverzüglich eine Rückantwort zum Fahrzeug PV1 zurück. In die Rückantwort, die auch die Information der empfangenen Nachricht beinhaltet, trägt sie zusätzlich den Empfangszeitpunkt der vorigen Nachricht und den Sendezeitpunkt der Rückantwortnachricht ein. Zum geplanten Zeitpunkt TRX2 ST sendet dann das Fahrzeug PV2 seine UWB-Abstandsmessnachricht. Auf diese Nachricht antwortet das Fahrzeug PV1 entsprechend. Wie in der bereits erwähnten Masterarbeit beschrieben können die Teilnehmer aus den erhaltenen Messergebnissen nach der DS-TWR-Methode den Abstand zwischen den Fahrzeugen genau ermitteln. Die Zeitpunkte für die Messungen zwischen den anderen Fahrzeugen sind in Fig. 5 genau angegeben.

Die aus den relevanten Abstandswerten abgeleiteten Steuerbefehle werden in jedem Fahrzeug über das Gateway 140 zu den Steuergeräten Motorsteuergerät 151 und ESP-Steuergerät 152 übermittelt. So wird dann der Abstand entweder verringert oder erhöht, je nachdem was nach dem Regelalgorithmus, der in dem Fahrerassistenz-Steuergerät 171 läuft, erforderlich ist.

In Fig.5 sind zwei aufeinander folgende Messzyklen für die Abstandsmessungen dargestellt. Weitere Zyklen könnten für die Erhöhung der Genauigkeit folgen. Der zweite Zyklus startet wieder mit dem Aussenden einer Abstandsmessungs-Koordinierungsnachricht. Weitere Zyklen könnten für die Erhöhung der Genauigkeit folgen. Wenn die Einzelmessungen nach der Methode DS-TWR immer im kürzesten Abstand aufeinander folgen, kann es entfallen die Startzeitpunkte für die zweiten Messungen, also für TRX2 ST, TRX4 ST und TRX6 ST in die Abstandsmessungs-Koordinierungsnachricht einzufügen.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

## Bezugszeichenliste

| | |
|---|---|
| 10 | Internet |
| 20 | Basisstation |
| 30 | Mobilfunknetz-Teilnehmerstation |
| 40 | Evolved Packet Core EPC |
| 50 | Zentralrechner |
| 100 | Blockdiagramm Fahrzeug-Elektronik |
| 102 | Ethernet-Bus |
| 105 | Kamera |
| 104 | CAN-Bus |
| 108 | CAN-Bus |
| 110 | On-Board Unit |
| 120 | Navigationssystem |
| 140 | Gateway |
| 151 | Motor-Steuergerät |
| 152 | ESP-Steuergerät |
| 153 | Getriebe-Steuergerät |
| 161 | Sensor 1 |
| 162 | Sensor 2 |
| 163 | Sensor 3 |
| 171 | Fahrerassistenz-Steuergerät |
| 172 | 1. UWB Transceiver |
| 173 | 2. UWB Transceiver |
| 1712 | Platoon-Koordinierungseinheit |
| PV1 | Platoon-Fahrzeug |
| PV2 | Platoon-Fahrzeug |
| PV3 | Platoon-Fahrzeug |
| PL | Platoon-Führungsfahrzeug |
| SM | Abstandsmessungs-Koordinierungsnachricht |
| SM1 | -- |
| SMn | Nachrichtenfelder |

## Patentansprüche

1. Verfahren zur Durchführung von Abstandsmessungen zwischen den Fahrzeugen (PV1, PV2, PV3, PL) einer Fahrzeugkolonne, bei dem die Abstände (d) zwischen den Fahrzeugen (PV1, PV2, PV3, PL) der Fahrzeugkolonne automatisch geregelt werden, wobei zur Abstandsmessung eine Methode des UWB Ranging, entsprechend Ultra Wide Band Ranging, eingesetzt wird, bei der pro Einzelabstandsmessung eine Nachricht zu einem vorausfahrenden oder nachfolgenden Fahrzeug (PV1, PV2, PV3, PL) gesendet wird, welches nach Empfang dieser Nachricht eine sofortige Rückantwort zu dem ersten Fahrzeug (PV1, PV2, PV3, PL) zurücksendet, **dadurch gekennzeichnet, dass** eine Koordinierung der zeitlichen Abfolge der Einzelabstandsmessungen zwischen jeweils zwei Fahrzeugen (PV1, PV2, PV3, PL) der Fahrzeugkolonne erfolgt, derart, dass den Einzelabstandsmessungen jeweils eine geplante Zeit zugewiesen wird, wann sie ausgehend von einem Koordinierungsereignis stattfinden sollen, wobei das Koordinierungsereignis dem Aussenden einer Abstandsmessungs-Koordinierungsnachricht (SM) von einer Leitstelle (50) oder einem Fahrzeug (PV1, PV2, PV3, PL) der Fahrzeugkolonne entspricht, wobei Startzeitpunkte für die Einzelabstandsmessungen zwischen den Fahrzeugen (PV1, PV2, PV3, PL) der Fahrzeugkolonne so koordiniert werden, dass die Einzelabstandsmessungen nacheinander durchgeführt werden, wobei die Einzelabstandsmessungen vom hinteren Ende der Fahrzeugkolonne beginnend nach vorne oder vom vorderen Ende der Fahrzeugkolonne beginnend nach hinten durchgeführt werden.

2. Verfahren nach Anspruch 1, wobei die Fahrzeuge (PV1, PV2, PV3, PL) der Fahrzeugkolonne mit Kommunikationsmitteln (110) für die Fahrzeug-zu-Fahrzeug-Kommunikation, nachfolgend V2V-Kommunikation genannt, ausgestattet sind und die Abstandsmessungs-Koordinierungsnachricht (SM) über die Kommunikationsmittel (110) für die V2V-Kommunikation an die weiteren Fahrzeuge (PV1, PV2, PV3, PL) der Fahrzeugkolonne ausgesendet wird.

3. Verfahren nach Anspruch 1 oder 2, wobei die Koordinierung der Einzelabstandsmessungen von dem Führungsfahrzeug (PL) der Fahrzeugkolonne durchgeführt wird, in dem das Führungsfahrzeug (PL) die Abstandsmessungs-Koordinierungsnachricht (SM) an die weiteren Fahrzeuge (PV1, PV2, PV3, PL) der Fahrzeugkolonne sendet.

4. Verfahren nach Anspruch 3, wobei die Abstandsmessungs-Koordinierungsnachricht (SM) an die weiteren Fahrzeuge (PV1, PV2, PV3, PL) der Fahrzeugkolonne per Broadcast oder Multicast an die weiteren Fahrzeuge (PV1, PV2, PV3, PL) der Fahrzeugkolonne gesendet wird.

5. Verfahren nach Anspruch 4, wobei die Abstandsmessungs-Koordinierungsnachricht (SM) über den LTE Sidelink-Kanal SL-Broadcast Control Channel (SBCCH), entsprechend der Long Term Evolution Standard-Familie, oder über eine Kommunikation in einem für die Fahrzeug-Direktkommunikation eingerichteten WLAN p Netz, entsprechend Wireless LAN, an die weiteren Fahrzeuge (PV1, PV2, PV3, PL) der Fahrzeugkolonne gesendet wird.

6. Verfahren nach einem der Ansprüche 3 bis 5, wobei in der Abstandsmessungs-Koordinierungsnachricht (SM) die geplanten Startzeitpunkte (TRX1 ST bis TRXN ST) für die Einzelabstandsmessungen zwischen den Fahrzeugen (PV1, PV2, PV3, PL) der Fahrzeugkolonne eingetragen werden.

7. Verfahren nach Anspruch 6, wobei in der Abstandsmessungs-Koordinierungsnachricht (SM) eine Referenzzeit (SYNC TS) zur Synchronisierung der Uhren in den einzelnen Fahrzeugen (PV1, PV2, PV3, PL) der Fahrzeugkolonne eingetragen wird.

8. Verfahren nach einem der vorhergehenden Ansprüche, wobei zur Abstandsmessung die Methode des UWB Ranging in der Art Single-Sided Two-Way Ranging SS-TWR oder Double-Sided Two-Way Ranging DS-TWR durchgeführt wird.

9. Fahrzeugmodul zur Verwendung bei dem Verfahren nach einem der vorhergehenden Ansprüche zur Durchführung von Abstandsmessungen zwischen den Fahrzeugen (PV1, PV2, PV3, PL) einer Fahrzeugkolonne, bei dem die Abstände (d) zwischen den Fahrzeugen (PV1, PV2, PV3, PL) der Fahrzeugkolonne automatisch geregelt werden, wobei zur Abstandsmessung eine Methode des UWB Ranging, entsprechend Ultra Wide Band Ranging, eingesetzt wird, aufweisend ein Mobilfunk-Kommunikationsmodul (110) für die Absendung und den Empfang von Nachrichten über ein Mobilfunksystem, wobei das Mobilfunk-Kommunikationsmodul (110) ausgelegt ist, pro Einzelabstandsmessung eine Nachricht zu einem vorausfahrenden oder nachfolgenden Fahrzeug (PV1, PV2, PV3, PL) zu senden, welches nach Empfang dieser Nachricht eine sofortige Rückantwort zu dem ersten Fahrzeug (PV1, PV2, PV3, PL) zurücksendet, und weiter aufweisend ein Abstandsregelmodul (171), **dadurch gekennzeichnet, dass** das Abstandsregelmodul (171) und das Mobilfunk-Kommunikationsmodul (110) ausgelegt sind, über das Mobilfunk-Kommunikationsmodul (110) eine Abstandsmessungs-Koordinierungsnachricht (SM) an die weiteren Fahrzeuge (PV1, PV2, PV3, PL) der Fahrzeugkolonne zu senden, wobei das Abstandsregelmodul (171) ausgelegt ist, eine Koordinierung der zeitlichen Abfolge der Einzelabstandsmessungen zwischen jeweils zwei Fahrzeugen (PV1, PV2, PV3, PL) der Fahrzeugkolonne vorzunehmen, derart, dass das Abstandsregelmodul (171) den Einzelabstandsmessungen jeweils eine geplante Zeit zuweist, wann sie ausgehend von einem Koordinierungsereignis stattfinden sollen, wobei das Koordinierungsereignis dem Aussenden einer Abstandsmessungs-Koordinierungsnachricht (SM) entspricht, wobei das Abstandsregelmodul (171) ausgelegt ist, Startzeitpunkte für die Einzelabstandsmessungen so zu koordinieren, dass die Einzelabstandsmessungen nacheinander durchgeführt werden, wobei die Einzelabstandsmessungen vom hinteren Ende der Fahrzeugkolonne beginnend nach vorne oder vom vorderen Ende der Fahrzeugkolonne beginnend nach hinten durchgeführt werden, wobei die Startzeitpunkte in der Abstandsmessungs-Koordinierungsnachricht (SM) zu den Fahrzeugen der Fahrzeugkolonne übertragen werden.

10. Fahrzeugmodul nach Anspruch 9, wobei das Abstandsregelmodul (171) ausgelegt ist, die geplanten Startzeitpunkte (TRX1 ST bis TRXN ST) für die Einzelabstandsmessungen zwischen den Fahrzeugen (PV1, PV2, PV3, PL) der Fahrzeugkolonne an das Mobilfunk-Kommunikationsmodul (110) zu senden, und das Mobilfunk-Kommunikationsmodul (110) ausgelegt ist, die geplanten Startzeitpunkte (TRX1 ST bis TRXN ST) für die Einzelabstandsmessungen zwischen den Fahrzeugen (PV1, PV2, PV3, PL) der Fahrzeugkolonne in die Abstandsmessungs-Koordinierungsnachricht (SM) einzutragen.

11. Fahrzeugmodul nach Anspruch 10, wobei das Mobilfunk-Kommunikationsmodul (110) ausgelegt ist, eine Referenzzeit (SYNC TS) zur Synchronisierung der Uhren in den einzelnen Fahrzeugen (PV1, PV2, PV3, PL) der Fahrzeugkolonne in die Abstandsmessungs-Koordinierungsnachricht (SM) einzutragen.

12. Fahrzeugmodul nach Anspruch 11, wobei das Mobilfunk-Kommunikationsmodul (110) ausgelegt ist, die aktuelle Uhrzeit der Uhr eines GNSS-Moduls (120), entsprechend Global Navigation Satellite System, in die Abstandsmessungs-Koordinierungsnachricht (SM) als Referenzzeit (SYNC TS) einzutragen.

13. Fahrzeug, **dadurch gekennzeichnet, dass** in dem Fahrzeug ein Fahrzeugmodul nach einem der Ansprüche 9 bis 12 verbaut ist.

**Claims**

1. Method for carrying out distance measurements between the vehicles (PV1, PV2, PV3, PL) of a convoy, in which the distances (d) between the vehicles (PV1, PV2, PV3, PL) of the convoy are controlled automatically, wherein for distance measurement a UWB ranging method, corresponding to ultra-wide band ranging, is used, in which, per individual distance measurement, a message is sent to a vehicle in front or a vehicle behind (PV1, PV2, PV3, PL) which, following receipt of this message, sends an immediate response back to the first vehicle (PV1, PV2, PV3, PL), **characterized in that** coordination of the time sequence of the individual distance measurements between each two vehicles (PV1, PV2, PV3, PL) of the convoy is carried out such that a planned time is assigned to each individual distance measurement at which it is to take place starting from a coordination event, wherein the coordination event corresponds to the transmission of a distance measurement coordination message (SM) from a control station (50) or a vehicle (PV1, PV2, PV3, PL) of the convoy, wherein starting time points for the individual distance measurements between the vehicles (PV1, PV2, PV3, PL) of the convoy are coordinated so that the individual distance measurements are carried out in succession, wherein the individual distance measurements are carried out starting from the rear end of the convoy towards the front or starting from the front end of the convoy towards the rear.

2. Method according to Claim 1, wherein the vehicles (PV1, PV2, PV3, PL) of the convoy are equipped with communications means (110) for vehicle-to-vehicle communications, called V2V communications below, and the distance measurement coordination message (SM) is transmitted to the other vehicles (PV1, PV2, PV3, PL) of the convoy by means of the communications means (110) for V2V communications.

3. Method according to Claim 1 or 2, wherein the coordination of the individual distance measurements is carried out by the lead vehicle (PL) of the convoy, in which the lead vehicle (PL) sends the distance measurement coordination message (SM) to the other vehicles (PV1, PV2, PV3, PL) of the convoy.

4. Method according to Claim 3, wherein the distance measurement coordination message (SM) to the other vehicles (PV1, PV2, PV3, PL) of the convoy is sent to the other vehicles (PV1, PV2, PV3, PL) of the convoy by broadcast or multicast.

5. Method according to Claim 4, wherein the distance measurement coordination message (SM) is sent to the other vehicles (PV1, PV2, PV3, PL) of the convoy by means of the LTE sidelink channel SL Broadcast Control Channel (SBCCH), corresponding to the long term evolution standard family, or by means of communications in a WLAN p network arranged for direct vehicle communications, corresponding to a wireless LAN.

6. Method according to one of Claims 3 to 5, wherein the planned starting time points (TRX1 ST to TRXN ST) for the individual distance measurements between the vehicles (PV1, PV2, PV3, PL) of the convoy are incorporated in the distance measurement coordination message (SM).

7. Method according to Claim 6, wherein a reference time (SYNC TS) for synchronization of the clocks in the individual vehicles (PV1, PV2, PV3, PL) of the convoy is incorporated in the distance measurement coordination message (SM).

8. Method according to one of the preceding claims, wherein for distance measurement the UWB ranging method of the type single-sided two-way ranging SS-TWR or double-sided two-way ranging DS-TWR is carried out.

9. Vehicle module for use in the method according to one of the preceding claims for carrying out distance measurements between the vehicles (PV1, PV2, PV3, PL) of a convoy, in which the distances (d) between the vehicles (PV1, PV2, PV3, PL) of the convoy are controlled automatically, wherein for distance measurement a UWB ranging method, corresponding to ultra-wide band ranging, is used, comprising a mobile radio communications module (110) for the transmission and the reception of messages by means of a mobile radio system, wherein the mobile radio communications module (110) is designed, per individual distance measurement, to send a message to a vehicle in front or a vehicle behind (PV1, PV2, PV3, PL) which, following receipt of this message, sends an immediate response back to the first vehicle (PV1, PV2, PV3, PL), and further comprising a distance control module (171), **characterized in that** the distance control module (171) and the mobile radio communications module (110) are designed to send a distance measurement coordination message (SM) to the other vehicles (PV1, PV2, PV3, PL) of the convoy by means of the mobile radio communications module (110), wherein the distance control module (171) is designed to coordinate the time sequence of the individual distance measurements between each two vehicles (PV1, PV2, PV3, PL) of the convoy such that the distance control module (171) assigns a planned time to each individual distance measurement at which it is to take place starting from a coordination event, wherein the coordination event corresponds to the transmission of a distance measurement coordination message (SM), wherein the distance control module (171) is designed to coordinate starting time points for the individual distance measurements so that the individual distance measurements are carried out in succession, wherein the individual distance measurements are carried out starting from the rear end of the convoy towards the front or starting from the front end of the convoy towards the rear, wherein the starting time points are transmitted to the vehicles of the convoy in the distance measurement coordination message (SM).

10. Vehicle module according to Claim 9, wherein the distance control module (171) is designed to send the planned starting time points (TRX1 ST to TRXN ST) for the individual distance measurements between the vehicles (PV1, PV2, PV3, PL) of the convoy to the mobile radio communications module (110) and the mobile radio communications module (110) is designed to incorporate the planned starting time points (TRX1 ST to TRXN ST) for the individual distance measurements between the vehicles (PV1, PV2, PV3, PL) of the convoy in the distance measurement coordination message (SM).

11. Vehicle module according to Claim 10, wherein the mobile radio communications module (110) is designed to incorporate a reference time (SYNC TS) for synchronization of the clocks in the individual vehicles (PV1, PV2, PV3, PL) of the convoy in the distance measurement coordination message (SM).

12. Vehicle module according to Claim 11, wherein the mobile radio communications module (110) is designed to incorporate the current time of day of the clock of a GNSS module (120), corresponding to Global Navigation Satellite System, in the distance measurement coordination message (SM) as a reference time (SYNC TS).

13. Vehicle, **characterized in that** a vehicle module according to one of Claims 9 to 12 is installed in the vehicle.

**Revendications**

1. Procédé permettant d'effectuer des mesures de distance entre les véhicules (PV1, PV2, PV3, PL) d'un convoi, les distances (d) entre les véhicules (PV1, PV2, PV3, PL) du convoi étant régulées automatiquement, dans lequel, pour la mesure de distance, une méthode de télémétrie à bande ultralarge, selon « Ultra Wide Band Ranging », est mise en œuvre dans laquelle, pour chaque mesure de distance individuelle, un message est envoyé au véhicule qui précède ou au véhicule qui suit (PV1, PV2, PV3, PL) qui renvoie après réception de ce message une réponse immédiate au premier véhicule (PV1, PV2, PV3, PL),

**caractérisé en ce qu'**une coordination de l'ordre chronologique des mesures de distance individuelles entre respectivement deux véhicules (PV1, PV2, PV3, PL) du convoi est effectuée de telle sorte qu'une heure prévue est respectivement associée aux mesures de distance individuelles à laquelle elles doivent avoir lieu en partant d'un événement de coordination, l'événement de coordination correspondant à l'envoi d'un message de coordination de mesures de distance (SM) par un poste de contrôle (50) ou un véhicule (PV1, PV2, PV3, PL) du convoi, les heures de départ pour les mesures de distance individuelles entre les véhicules (PV1, PV2, PV3, PL) du convoi étant coordonnées de telle sorte que les mesures de distance individuelles sont effectuées les unes après les autres, les mesures de distance individuelles étant effectuées en partant de l'extrémité arrière du convoi vers l'avant ou en partant de l'extrémité avant du convoi vers l'arrière.

2. Procédé selon la revendication 1, dans lequel les véhicules (PV1, PV2, PV3, PL) du convoi sont équipés de moyens de communication (110) pour la communication de véhicule à véhicule, appelée ci-après communication V2V, et le message de coordination de mesures de distance (SM) est envoyé par les moyens de communication (110) aux autres véhicules (PV1, PV2, PV3, PL) du convoi pour la communication V2V.

3. Procédé selon la revendication 1 ou 2, dans lequel la coordination des mesures de distance individuelles est effectuée par le véhicule de tête (PL) du convoi en ce que le véhicule de tête (PL) envoie le message de coordination de mesures de distance (SM) aux autres véhicules (PV1, PV2, PV3, PL) du convoi.

4. Procédé selon la revendication 3, dans lequel le message de coordination de mesures de distance (SM) est envoyé aux autres véhicules (PV1, PV2, PV3, PL) du convoi par radiodiffusion ou multidiffusion aux autres véhicules (PV1, PV2, PV3, PL) du convoi.

5. Procédé selon la revendication 4, dans lequel le message de coordination de mesures de distance (SM) est envoyé par le canal de liaison latérale LTE « SL-Broadcast Control Channel » (SBCCH), selon la famille de normes « Long Term Evolution », ou par une communication dans un réseau WLAN-p aménagé pour la communication directe entre véhicules, selon « Wireless LAN », aux autres véhicules (PV1, PV2, PV3, PL) du convoi.

6. Procédé selon l'une quelconque des revendications 3 à 5, dans lequel les heures de départ prévues (TRX1 ST à TRXN ST) pour les mesures de distance individuelles entre les véhicules (PV1, PV2, PV3, PL) du convoi sont inscrites dans le message de coordination de mesures de distance (SM).

7. Procédé selon la revendication 6, dans lequel une heure de référence (SYNC TS) pour la synchronisation des horloges sur les différents véhicules (PV1, PV2, PV3, PL) du convoi est inscrite dans le message de coordination de mesures de distance (SM).

8. Procédé selon l'une quelconque des revendications précédentes, dans lequel, pour la mesure de distance, la méthode de la télémétrie à bande ultralarge est effectuée selon le mode télémétrie bidirectionnelle unilatérale SS-TWR ou télémétrie bidirectionnelle bilatérale DS-TWR.

9. Module de véhicule à utiliser dans le procédé selon l'une quelconque des revendications précédentes pour effectuer des mesures de distance entre les véhicules (PV1, PV2, PV3, PL) d'un convoi, les distances (d) entre les véhicules (PV1, PV2, PV3, PL) du convoi étant régulées automatiquement, dans lequel, pour la mesure de distance, une méthode de télémétrie à bande ultralarge, selon « Ultra Wide Band Ranging », est mise en œuvre, présentant un module de communication par téléphonie mobile (110) pour l'envoi et la réception de messages par un système de téléphonie mobile, le module de communication par téléphonie mobile (110) étant conçu pour envoyer pour chaque mesure de distance individuelle un message à un véhicule qui précède ou à un véhicule qui suit (PV1, PV2, PV3, PL) qui renvoie après réception de ce message une réponse immédiate au premier véhicule (PV1, PV2, PV3, PL), et présentant en outre un module de régulation de distance (171),
**caractérisé en ce que** le module de régulation de distance (171) et le module de communication par téléphonie mobile (110) sont conçus pour envoyer par le module de communication par téléphonie mobile (110) un message de coordination de mesures de distance (SM) aux autres véhicules (PV1, PV2, PV3, PL) du convoi, le module de régulation de distance (171) étant conçu pour procéder à une coordination de l'ordre chronologique des mesures de distance individuelles entre respectivement deux véhicules (PV1, PV2, PV3, PL) du convoi, de telle sorte que le module de régulation de distance (171) attribue aux mesures de distance individuelles respectivement une heure prévue à laquelle elles doivent avoir lieu en partant d'un événement de coordination, l'événement de coordination correspondant à l'envoi d'un message de coordination de mesures de distance (SM), le module de régulation de distance (171) étant conçu pour coordonner les heures de départ pour les mesures de distance individuelles de telle sorte que les mesures de distance individuelles sont effectuées les unes après les autres, les mesures de distance individuelles étant effectuées en partant de l'extrémité arrière du convoi vers l'avant ou en partant de l'extrémité avant vers l'arrière, les heures de départ étant transmises aux véhicules du convoi dans le message de coordination de mesures de distance (SM).

10. Module de véhicule selon la revendication 9, dans lequel le module de régulation de distance (171) est conçu pour envoyer les heures de départ prévues (TRX1 ST à TRXN ST) pour les mesures de distance individuelles entre les véhicules (PV1, PV2, PV3, PL) du convoi au module de communication par téléphonie mobile (110), et le module de communication par téléphonie mobile (110) est conçu pour inscrire les heures de début prévues (TRX1 ST à TRXN ST) pour les mesures de distance individuelles entre les véhicules (PV1, PV2, PV3, PL) du convoi dans le message de coordination de mesures de distance (SM).

11. Module de véhicule selon la revendication 10, dans lequel le module de communication par téléphonie mobile (110) est conçu pour inscrire une heure de référence (SYNC TS) pour la synchronisation des horloges sur les différents véhicules (PV1, PV2, PV3, PL) du convoi dans le message de coordination de mesures de distance (SM).

12. Module de véhicule selon la revendication 11, dans lequel le module de communication par téléphonie mobile (110) est conçu pour inscrire l'heure actuelle de l'horloge d'un module GNSS (120), selon « Global Navigation Satellite System », dans le message de coordination de mesures de distance (SM) comme heure de référence (SYNC TS).

13. Véhicule, **caractérisé en ce qu'**un module de véhicule selon l'une quelconque des revendications 9 à 12 est installé sur le véhicule.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040193372 A1
- US 20150269845 A1

- WO 20070133264 A2

**In der Beschreibung aufgeführte Nicht-Patentliteratur**

- Evolved Universal Terrestrial Radio Access (E-UTRA); Physical layer procedures (3GPP TS 36.213 version 13.0.0 Release 13). *ETSI TS 136 213 V13.0.0,* Mai 2016